# EUROPEAN PATENT SPECIFICATION

(11) **EP 3 092 348 B1**
(45) Date of publication and mention of the grant of the patent: **18.12.2019**
(21) Application number: 14835509.2
(22) Date of filing: 23.12.2014
(51) Int. Cl.: E03C 1/08, B05B 1/00, E03C 1/10, G05D 7/01, E03C 1/02, B05B 1/30

(54) **LIMITING VALVE AND VALVE ASSEMBLY**
BEGRENZUNGSVENTIL UND VENTILANORDNUNG
VALVE DE LIMITATION ET ENSEMBLE À VALVE

(30) Priority: 10.01.2014 IT BS20140011
(43) Date of publication of application: 16.11.2016
(73) Proprietor: Nikles Tec Italia S.r.l., 25013 Carpenedolo Brescia (IT)
(72) Inventor: NIKLES, Gerhard, I-25013 Carpenedolo (Brescia) (IT); AZZINI, Mauro, I-25013 Carpenedolo (Brescia) (IT); SPERA, Marco, I-25013 Carpenedolo (Brescia) (IT)
(74) Representative: Chimini, Francesco
(86) International application number: PCT/IB2014/067253
(87) International publication number: WO 2015/104617

(56) References cited:
- EP-A1- 0 787 864
- EP-A1- 2 495 372
- DE-A1-102009 057 559
- DE-B3-102006 057 787
- US-A1- 2013 199 626

## Description

The present invention relates to a limiting valve for a fluid flow, for example water, and an assembly comprising such a valve.

It is known to use flow limiting valves, used primarily to stabilise, with respect to the transit direction of the fluid, a fluid flow downstream of the valve itself.

A particular valve type includes an O-ring of flexible material which, upon reaching a given flow speed, is deformed by the fluid thereby partially obstructing a passage which connects a duct portion upstream and a duct portion downstream of the valve: the greater the speed, the greater the deformation of the O-ring, the greater the obstruction of said passage.

A valve of this type is for example known from document DE102011120008A1.

Further valves according to the preamble of claim 1 are known from documents DE 10 2006 057787 B3, DE 10 2009 057559 A1, EP 2 495 372 A1, US 2013/199626 A1 or EP 0 787 864 A1.

However, the limiting valves of the prior art have the drawback that the O-rings used work only within very narrow ranges of flow speed. In fact, the material of which they are made allows limited deformations, which are not adjustable at will in a quite large range of flow speed. This is mainly due to the physical limitations intrinsic to the flexibility of the materials used.

The present invention falls within this context, proposing to provide a limiting valve capable of covering a wider range of flow speeds compared to conventional valves, and in particular designed to allow obtaining two or more limit interception stages, when the flow speed of the fluid gradually increases.

Such an object is achieved by a limiting valve according to claim 1, and by a valve assembly according to claim 12. The dependent claims describe preferred embodiment variants.

The object of the present invention will now be described in detail, with the aid of the accompanying drawings, in which:
- figures 1 and 6 show a perspective view, respectively with combined parts and with separated parts, of a limiting valve object of the present invention, according to a possible variant;
- figures 2 and 5 show two plan views, a front one and a reverse one, of the valve in figure 1;
- figures 3 and 4 show sections along planes III-III and IV-IV shown in figure 2;
- figures 10, 7 and 9 show two perspective views from opposite sides and an exploded view, respectively, of an assembly of the present invention, according to one embodiment;

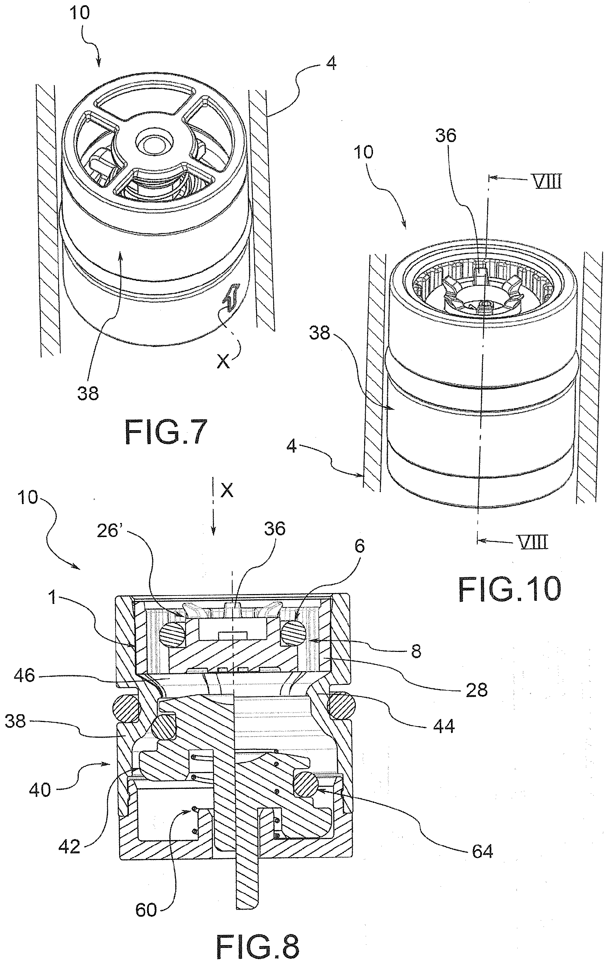

- figure 8 shows a section along plane VIII-VIII of the assembly in figure 10, wherein the left half of such a figure shows an interception configuration of the check valve, while the right half shows a transit configuration thereof.

With reference to the tables above, reference numeral 1 indicates, as a whole, a limiting valve of a fluid flow passing through such a valve.

Such a limiting valve 1 comprises a support body 2, which extends in a flow plane P transversal (preferably orthogonal) to a direction of transit X of a fluid in a duct 4.

While the embodiment in figure 7 shows a valve assembly 10 - discussed hereafter - inserted in the fluid duct 4 (the latter only schematised in section), the limiting valve described herein may be used individually, i.e. separately from a check valve.

Therefore, in an embodiment not shown of the limiting valve 1, there may be provided sealing means acting between the support body 2 and the fluid duct 4 in order to convey the fluid (for example water) through valve 1 rather than in the space delimited between an outer surface 50 of said body 2 and an inner surface of duct 4.

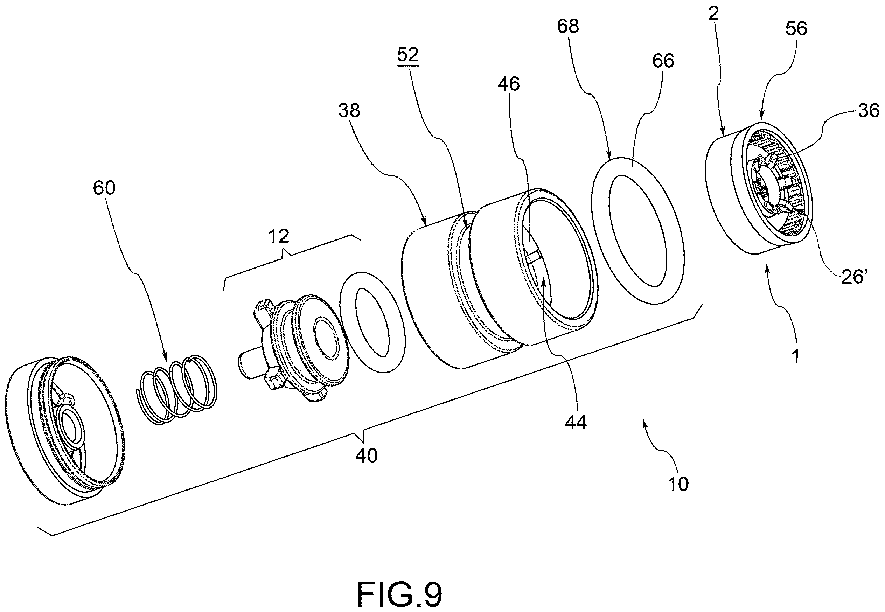

For example, the support body 2 may delimit externally a recessed seat for the partial housing of said sealing means, in particular a gasket or an O-ring. According to a variant, said seat of the support body 2 may be shaped in a manner similar to the sealing seat 52 of the hollow body 38 shown in figure 9, therefore of a shape generally complementary to an outer surface 66 of the sealing means, of gasket 68 or of the α-ring.

According to an advantageous embodiment, at least a portion 56 of the outer surface 50 may have a slight frusto-conicity which tapers in the transit direction X of the fluid.

According to the embodiments shown, the support body 2 comprises a substantially tubular wall 28, which surrounds a body compartment 30. Preferably, a free edge area of said wall 28 delimits the slightly frusto-conical portion 56.

According to a further variant, the support body 2 comprises a bottom wall 22, which surrounds on the one hand the support body, and which is preferably joined to the tubular wall 28 through a plurality of discrete connection sections 48, for example in the shape of spokes.

According to a still further variant, in the bottom wall 22 there are formed one or more fluid transit holes 24.

Preferably, the bottom wall 22 is at least partially shaped with a radial pattern. According to a further variant, at least a pair of spokes delimits a fluid transit hole 24.

The limiting valve 1 further comprises an annular regulation member 6, housed at least partially in the support body 2 and which in conjunction therewith delimits one or more lumina 8 for crossing of said fluid.

In particular, the annular regulation member 6 is at least partially housed in the body compartment 30, so that the tubular wall 28 at least radially delimits said member 6.

In the present description, the terms "upstream", "downstream", "radial" and "axial" will be referred to the transit direction of the fluid, unless otherwise specified. In particular, such terms will refer to the transit direction at the inner portion of the fluid within the fluid duct 4, substantially coinciding with the prevailing development axis of such a duct.

The width of the said lumen 8 is variable and dependent on the flow speed passing through said valve 1. In fact, under the action of the fluid, the annular regulation member 6 is elastically deformable to narrow said lumen 8 so as to regulate the flow of fluid downstream of valve 1 (and more precisely, downstream of the annular regulation member).

In other words, since a first flow velocity corresponds to a deformation of a certain extent of the regulation member 6, and thus a given lumen for the transit of the fluid, a higher velocity will correspond to a greater deformation or compression of the member, and a consequently smaller lumen width for the transit of the fluid.

Preferably, the annular regulation member 6 is or includes a gasket or an O-ring. Advantageously, such a member is substantially toroidal in shape, with a section for example circular or elliptical/oval.

In order to retain the annular regulation member 6 in the support body 2, the latter preferably comprises a retention pin 26 on which member 6 is mounted, for example in a substantially coaxial manner.

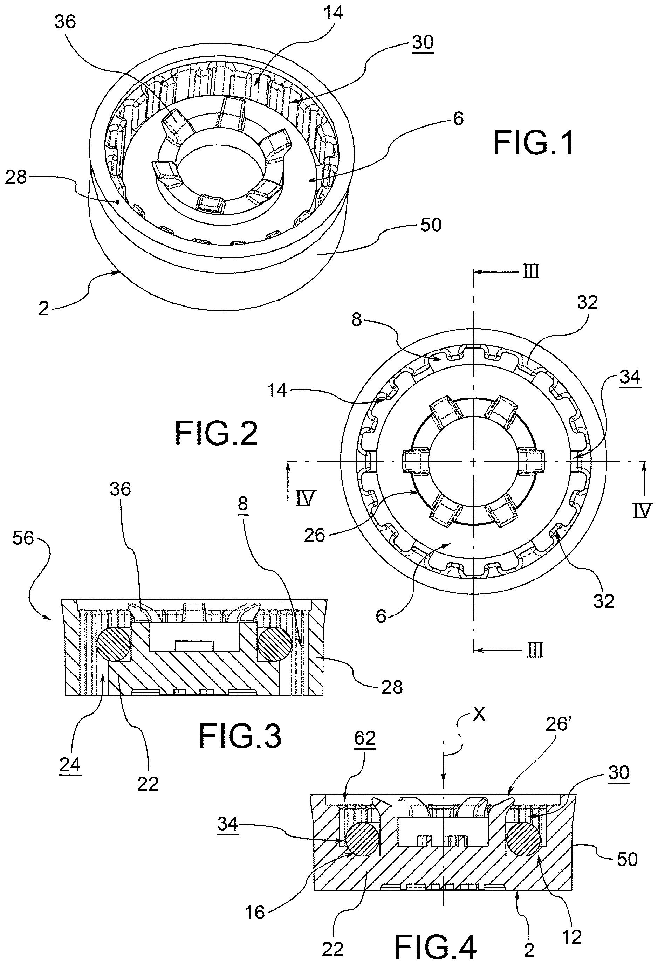

In the embodiment shown for example in figure 4, the retention pin 26 is at least partially housed inside the body compartment 30, and is therefore at least partially enclosed by the substantially tubular wall 28.

Preferably, the retention pin 26 extends from the bottom wall 22 in an axial direction, i.e. along the transit direction X.

According to a further variant, a free end portion 26' of the retention pin 26 branches into a plurality of appendages 36 generally hook-shaped.

More precisely, appendages 36 extend radially outwardly, so as to prevent an axial disengagement of the annular regulation member 6.

In fact, the transverse dimensions of the plurality of appendages 36 is superior to a member compartment 58 surrounded by the annular regulation member 6. It follows that, according to this variant, member 6 may be fitted on the retention pin 26 only if the material of which the regulation member 6 is made is elastically pulled, so as to come over said appendages 36 in a direction first radial and then axial.

The limiting valve further comprises at least a first 12 and a second 14 limiting element on which the annular regulation member 6 works mechanically to determine a first and second limit deformation of said member 6 depending on the flow speed of the fluid.

In other words, innovatively, the limiting valve object of the present invention allows working in a wider range of flow speeds than the conventional valves, since it uses two different limiters types of the deformation of the regulating member, preferably acting at different times.

In fact, according to a preferred embodiment, up to a first flow speed, a part 16 of the annular regulation member 6 acts solely on the first limiting element 12, and a different part 18 of the same member acts on the second limiting element 14 above the first speed. For example, part 16 which works first is a lower surface of member 6, while the other part 18 is an outer side surface of such a member.

It follows that for low flow speed values, the second limiter will remain passive, while upon exceeding the first speed, the two limiting elements will act together.

According to an embodiment variant, the first 12 and second 14 limiting element, or the plurality thereof, are staggered at least in a radial direction to progressively intercept the annular regulation member 6 in deformation.

Preferably, the first limiting element 12 comprises one or more containment surfaces 20 delimited by the support body 2 (preferably delimited by the bottom wall 22), wherein the annular regulation member 6 is at least partially housed.

For example, the containment surface 20 is conformed or has a depth such that, when the annular regulation member is at rest (i.e. in the absence of fluid acting thereon), less than 50% of its thickness is surrounded by the containment surface 20.

Advantageously, the limiting valve 1 comprises a single containment surface 20 of a generally truncated-cone or concave shape. Preferably, surface 20 develops annularly around the retention pin 26, when provided.

According to a further variant, the containment surface 20 extends at a bottom wall 22 of the support body 2, in which at least one fluid transit hole 24 is made communicating with said lumen 8 in a fluidic manner.

Therefore, according to this variant, the fluid entering into the limiting valve 1 from a body inlet 62 of the support body 2, crosses lumen 8 and comes out therefrom through the fluid transit hole 24 or the plurality thereof.

For example, lumen 8 extends annularly within the support body.

According to a still further variant, the at least one fluid transit hole 24 is arranged radially externally to the retention pin 26 (and in particular outside the containment surface 20), and radially internally of the substantially tubular wall 28.

According to an advantageous embodiment, the second limiting element 14 comprises at least one radial projection 32 (preferably a plurality of such projections) which extend internally from the tubular wall 28 to intercept the deformations of the annular regulation member 6.

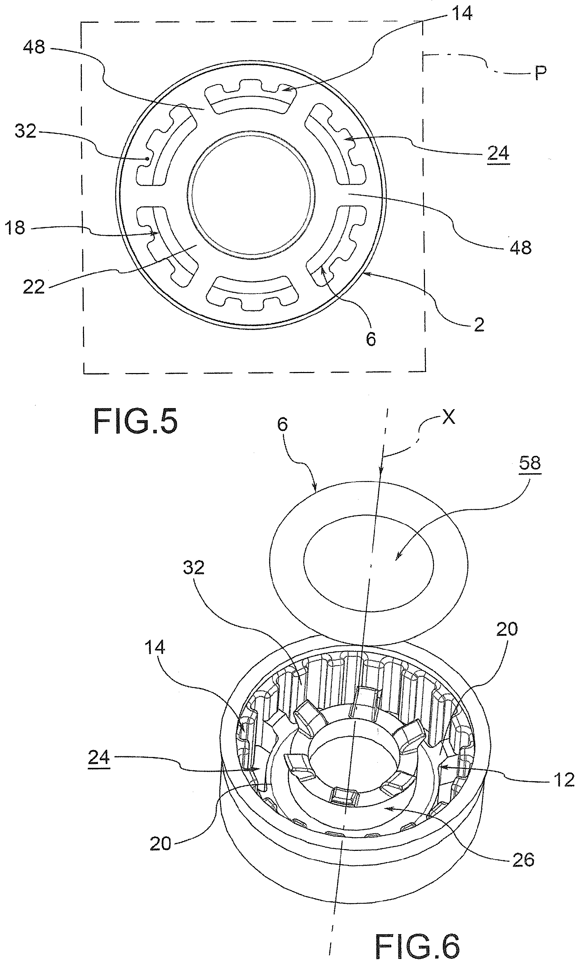

In the embodiment of figure 5, the radial projection is in the shape of a rib arranged parallel to the transit direction. Preferably, there is provided a plurality of radial projections 32, angularly staggered along the tubular wall 28, for example at a constant pitch.

According to a particularly advantageous embodiment, the containment surface 20 is separated from at least one radial projection 32 by means of a free space 34, inside which space the deformed annular regulation member 6 has radially exceeded the first limiting element 12 but still lies at a distance from the second limiting element 14.

Therefore, the presence of said free space 34 allows a progressive interception of the annular regulation member.

The present invention also relates to a valve assembly 10 comprising a check valve 40, which comprises a hollow body 38 housing a mobile obturator 42, and a limiting valve 1, according to any of the previous embodiments, at least partially housed in the hollow body 38.

Preferably, as for example schematically shown by the arrow in figure 7, the limiting valve 1 is arranged upstream of the check valve 40 in relation to the transit direction X of the fluid.

Even more preferably, the hollow body 38 internally defines an annular abutment bead 44 for the mobile obturator 42, with which it preferably forms a seal, wherein the bead further delimits a stop surface 46 for the support body 2 of the limiting valve 1.

Therefore, such a bead carries out the dual function of abutment for both the maximum engagement of the limiting valve "1 in the hollow body 38, and for the mobile obturator 42 when the latter lies in its own interception configuration.

Referring in particular to the section in figure 8, depending on the flow velocity of the fluid, the mobile obturator can translate between the interception configuration (left), in which the obturator 42 forms a seal with the annular abutment bead 44 - specifically by means of an interposed seal 64 - and a transit configuration (right) in which said obturator 42 is distanced from said bead.

Advantageously, assembly 10 comprises elastic means 60 acting between the hollow body 38 and the mobile obturator 42 to bring the latter in the interception configuration: when the force of the flow speed on the obturator is then sufficiently high to overcome the force of the elastic means 60, the mobile obturator will arrange in the transit configuration. Conversely, when the force of the elastic means 60 is stronger than the force of the flow on the obturator, the check valve will arrange in the interception configuration, thus preventing the flow in a direction opposite to the transit direction X.

Advantageously, the valve object of the present invention is constructively simple, therefore suitable to be produced in a cost-effective manner.

Advantageously, the valve object of the present invention allows creating an interstice with variable section for the crossing of the fluid flow and is designed to prevent a total closure of the same valve.

Advantageously, the valve object of the present invention is configured to distribute the forces of the fluid in a homogeneous manner along said member, so as to reduce the impact of mechanical stress to which the latter is periodically subjected.

Advantageously, the assembly object of the present invention is constructively simple since the mobile obturator valve acts directly on the hollow body, the latter also acting as a housing for the limiting valve.

Advantageously, the assembly object of the present invention is designed to prevent possible leaks of the regulation member. Furthermore, such a member is also highly localised within the support body.

## Claims

1. Limiting valve (1) of a fluid flow comprising:
- a support body (2), which extends in a flow plane (P) transversal to a direction of transit (X) of a fluid in a fluid duct (4);
- an annular regulation member (6), housed at least partially in the support body (2) and which in conjunction therewith delimits one or more lumina (8) for crossing of said fluid;
wherein, under the action of the fluid, the annular regulation member (6) is elastically deformable to narrow said lumen (8) so as to regulate the flow of fluid downstream of said valve (1); and
- at least a first (12) and a second (14) limiting element on which the annular regulation member (6) works mechanically to determine a first and second limit deformation of said member (6) depending on the flow speed of the fluid;
the first limiting element (12) comprising one or more containment surfaces (20) delimited by the support body (2), inside which the annular regulation member (6) is at least partially housed;
said limiting valve (1) being **characterized in that** the containment surface (20) is conformed or has a depth such that, when the annular regulation member is at rest - in the absence of fluid acting thereon - less than 50% of its thickness is surrounded by the containment surface (20) .

2. Valve according to claim 1, wherein the first (12) and second (14) limiting element, or the plurality thereof, are staggered at least in a radial direction to progressively intercept the annular regulation member (6) in deformation.

3. Valve according to any of the previous claims, comprising a single containment surface (20) of a generally truncated-cone shape.

4. Valve according to any of claims 1-2, comprising a single containment surface (20) of a generally concave shape.

5. Valve according to claims 1-4, wherein the containment surface (20) extends at a bottom wall (22) of the support body (2), in which at least one fluid transit hole (24) is made communicating with said lumen (8) in a fluidic manner.

6. Valve according to any of the previous claims, wherein the containment surface (20) extends annularly around a retention pin (26) of the annular regulation member (6).

7. Valve according to any of the previous claims, wherein the support body (2) comprises a substantially tubular wall (28), which circumscribes a body compartment (30) in which said member (6) is at least partially housed, and wherein the second limiting element (14) comprises at least one radial projection (32) which extends internally from said tubular wall (28) to intercept the deformations of the annular regulation member (6).

8. Valve according to the previous claim, comprising a plurality of radial projections (32), angularly staggered along the tubular wall (28), for example at a constant pitch.

9. Valve according to claim 7 or 8 when dependent on claim 3 or 4, wherein the containment surface (20) is separated from at least one radial projection (32) by means of a free space (34), inside which the deformed annular regulation member (6) has radially exceeded the first limiting element (12) but lies at a distance from the second limiting element (14).

10. Valve according to any of the previous claims, wherein the support body (2) comprises a retention pin (26) of the annular regulation member (6), on which the latter is fitted substantially coaxially, said pin comprising a free end portion (26') which branches into a plurality of generally hook-shaped appendages (36).

11. Valve assembly (10) comprising:
- a check valve (40) which comprises a hollow body (38) housing a mobile obturator (42); and
- a limiting valve (1) according to any of the previous claims, at least partially housed in the hollow body (38) .

12. Assembly according to claim 11, wherein, in relation to the transit direction (X) of the fluid, the limiting valve (1) is positioned upstream of the check valve (40).

13. Assembly according to claim 11 or 12, wherein the hollow body (38) internally defines an annular abutment bead (44) for the mobile obturator (42), wherein said bead delimits a stop surface (46) for the support body (2) of the limiting valve (1).

## Patentansprüche

1. Begrenzungsventil (1) für einen Fluidstrom, umfassend:
- einen Halterungskörper (2), welcher sich in einer Strömungsebene (P) transversal zu einer Transitrichtung (X) eines Fluids in einer Fluidleitung (4) erstreckt;
- ein ringförmiges Regulierungselement (6), welches wenigstens teilweise in dem Halterungskörper (2) aufgenommen ist und welches in Verbindung damit ein oder mehrere Lumen (8) zum Durchqueren des Fluids begrenzt;
wobei das ringförmige Regulierungselement (6) unter der Wirkung des Fluids elastisch verformbar ist, um das Lumen (8) derart zu verschmälern, dass die Strömung des Fluids stromabwärts des Ventils (1) reguliert wird; und
- wenigstens ein erstes (12) und ein zweites (14) Begrenzungselement, an welchen das ringförmige Regulierungselement (6) mechanisch arbeitet, um in Abhängigkeit der Strömungsgeschwindigkeit des Fluids eine erste und eine zweite Begrenzungsverformung des Elements (6) zu bestimmen;
wobei das erste Begrenzungselement (12) eine oder mehrere durch den Halterungskörper (2) begrenzte Behälterflächen (20) umfasst, innerhalb welcher das ringförmige Regulierungselement (6) wenigstens teilweise aufgenommen ist;
wobei das Begrenzungsventil (1) **dadurch gekennzeichnet ist, dass** die Behälterfläche (20) derart angepasst ist oder eine derartige Tiefe aufweist, dass, wenn sich das ringförmige Regulierungselement - in der Abwesenheit darauf wirkenden Fluids - in einer Ruhestellung befindet, weniger als 50 % seiner Dicke von der Behälterfläche (20) umgeben ist.

2. Ventil nach Anspruch 1, wobei das erste (12) und das zweite (14) Begrenzungselement oder die Mehrzahl davon wenigstens in einer radialen Richtung derart gestaffelt sind, dass sie das ringförmige Regulierungselement (6) in seiner Verformung progressiv unterbrechen.

3. Ventil nach einem der vorhergehenden Ansprüche, umfassend eine einzelne Behälterfläche (20) mit einer im Allgemeinen kegelstumpfförmigen Form.

4. Ventil nach einem der Ansprüche 1-2, umfassend eine einzelne Behälterfläche (20) mit einer im Allgemeinen konkaven Form.

5. Ventil nach einem der Ansprüche 1-4, wobei sich die Behälterfläche (20) an einer Bodenwand (22) des Halterungskörpers (2) erstreckt, in welcher wenigstens ein Fluidtransitloch (24) vorgesehen ist, welches in einer fluidischen Weise mit dem Lumen (8) in Verbindung steht.

6. Ventil nach einem der vorhergehenden Ansprüche, wobei sich die Behälterfläche (20) ringförmig um einen Haltestift (26) des ringförmigen Regulierungselements (6) erstreckt.

7. Ventil nach einem der vorhergehenden Ansprüche, wobei der Halterungskörper (2) eine im Wesentlichen rohrförmige Wand (28) umfasst, welche einen Körperraum (30) umgrenzt, in welchem das Element (6) wenigstens teilweise aufgenommen ist, und wobei das zweite Begrenzungselement (14) wenigstens einen radialen Vorsprung (32) umfasst, welcher sich innenliegend derart von der rohrförmigen Wand (28) erstreckt, dass er die Verformungen des ringförmigen Regulierungselements (6) unterbricht.

8. Ventil nach dem vorhergehenden Anspruch, umfassend eine Mehrzahl radialer Vorsprünge (32), welche entlang der rohrförmigen Wand (28), zum Beispiel mit einer konstanten Teilung, winklig gestaffelt sind.

9. Ventil nach Anspruch 7 oder 8, wenn abhängig von Anspruch 3 oder 4, wobei die Behälterfläche (20) mittels eines freien Raums (34), innerhalb welchem das verformte ringförmige Regulierungselement (6) das erste Begrenzungselement (12) radial überschritten hat, sich aber in einem Abstand von dem zweiten Begrenzungselement (14) befindet, von wenigstens einem radialen Vorsprung (32) getrennt ist.

10. Ventil nach einem der vorhergehenden Ansprüche, wobei der Halterungskörper (2) einen Haltestift (26) des ringförmigen Regulierungselements (6) umfasst, an welchem das Letztere im Wesentlichen koaxial angepasst ist, wobei der Stift einen freien Endabschnitt (26') umfasst, welcher sich in eine Mehrzahl im Allgemeinen hakenförmiger Fortsätze (36) verzweigt.

11. Ventilanordnung (10), umfassend:
- ein Rückschlagventil (40), welches einen hohlen Körper (38) umfasst, welcher einen mobilen Obturator (42) aufnimmt; und
- ein Begrenzungsventil (1) nach einem der vorhergehenden Ansprüche, welches wenigstens teilweise in dem hohlen Körper (38) aufgenommen ist.

12. Anordnung nach Anspruch 11, wobei das Begrenzungsventil (1) in Bezug auf die Transitrichtung (X) des Fluids stromaufwärts des Rückschlagventils (40) positioniert ist.

13. Anordnung nach Anspruch 11 oder 12, wobei der hohle Körper (38) innenliegend eine ringförmige Anlagewulst (44) für den mobilen Obturator (42) umfasst, wobei die Wulst eine Anschlagfläche (46) für den Halterungskörper (2) des Begrenzungsventils (1) begrenzt.

## Revendications

1. Valve de limitation (1) d'un écoulement fluidique comprenant :
- un corps de support (2), qui s'étend dans un plan d'écoulement (P) transversal à une direction de transit (X) d'un fluide dans un conduit de fluide (4) ;
- un élément de régulation annulaire (6), logé au moins partiellement dans le corps de support (2) et qui en conjonction avec celui-ci délimite une ou plusieurs lumières (8) pour la traversée dudit fluide ;
dans laquelle, sous l'action du fluide, l'élément de régulation annulaire (6) est élastiquement déformable pour rétrécir ladite lumière (8) de manière à réguler l'écoulement de fluide en aval de ladite valve (1) ; et
- au moins des premier (12) et second (14) éléments de limitation sur lesquels l'élément de régulation annulaire (6) travaille mécaniquement pour déterminer des première et seconde déformations de limite dudit élément (6) en fonction de la vitesse d'écoulement du fluide ;
le premier élément de limitation (12) comprenant une ou plusieurs surfaces de contention (20) délimitées par le corps de support (2), à l'intérieur duquel l'élément de régulation annulaire (6) est au moins partiellement logé ;
ladite valve de limitation (1) étant **caractérisée en ce que** la surface de contention (20) est conformée ou présente une profondeur telle que, lorsque l'élément de régulation annulaire est au repos - en l'absence de fluide agissant sur celui-ci - moins de 50 % de son épaisseur sont entourés par la surface de contention (20).

2. Valve selon la revendication 1, dans laquelle les premier (12) et second (14) éléments de limitation, ou la pluralité de ceux-ci, sont échelonnés au moins dans une direction radiale pour intercepter progressivement l'élément de régulation annulaire (6) en déformation.

3. Valve selon l'une quelconque des revendications précédentes, comprenant une seule surface de contention (20) d'une forme généralement tronconique.

4. Valve selon l'une quelconque des revendications 1-2, comprenant une seule surface de contention (20) d'une forme généralement concave.

5. Valve selon l'une quelconque des revendications 1-4, dans laquelle la surface de contention (20) s'étend au niveau d'une paroi inférieure (22) du corps de support (2), dans laquelle au moins un trou de transit de fluide (24) est réalisé en communication avec ladite lumière (8) d'une manière fluidique.

6. Valve selon l'une quelconque des revendications précédentes, dans laquelle la surface de contention (20) s'étend de façon annulaire autour d'une broche de retenue (26) de l'élément de régulation annulaire (6).

7. Valve selon l'une quelconque des revendications précédentes, dans laquelle le corps de support (2) comprend une paroi sensiblement tubulaire (28), qui circonscrit un compartiment de corps (30) dans lequel ledit élément (6) est au moins partiellement logé, et dans lequel le second élément de limitation (14) comprend au moins une saillie radiale (32) qui s'étend en interne à partir de ladite paroi tubulaire (28) pour intercepter les déformations de l'élément de régulation annulaire (6).

8. Valve selon la revendication précédente, comprenant une pluralité de saillies radiales (32), échelonnées de manière angulaire le long de la paroi tubulaire (28), par exemple selon un pas constant.

9. Valve selon la revendication 7 ou 8 prise dans la dépendance de la revendication 3 ou 4, dans laquelle la surface de contention (20) est séparée d'au moins une saillie radiale (32) au moyen d'un espace libre (34), à l'intérieur duquel l'élément de régulation annulaire déformé (6) a radialement dépassé le premier élément de limitation (12) mais repose à une distance du second élément de limitation (14).

10. Valve selon l'une quelconque des revendications précédentes, dans laquelle le corps de support (2) comprend une broche de retenue (26) de l'élément de régulation annulaire (6), sur laquelle ce dernier est monté de façon sensiblement coaxiale, ladite broche comprenant une partie d'extrémité libre (26') qui se divise en une pluralité d'appendices généralement en forme de crochet (36).

11. Ensemble de valve (10) comprenant :
- un clapet anti-retour (40) qui comprend un corps creux (38) logeant un obturateur mobile (42) ; et
- une valve de limitation (1) selon l'une quelconque des revendications précédentes, au moins partiellement logée dans le corps creux (38).

12. Ensemble selon la revendication 11, dans lequel, par rapport à la direction de transit (X) du fluide, la valve de limitation (1) est positionnée en aval du clapet anti-retour (40).

13. Ensemble selon la revendication 11 ou 12, dans lequel le corps creux (38) définit en interne un bourrelet de butée annulaire (44) pour l'obturateur mobile (42), dans lequel ledit bourrelet délimite une surface d'arrêt (46) pour le corps de support (2) de la valve de limitation (1).
